# EUROPÄISCHE PATENTSCHRIFT

(11) **EP 2 337 968 B1**
(45) Veröffentlichungstag und Bekanntmachung des Hinweises auf die Patenterteilung: **28.12.2011**
(21) Anmeldenummer: 09781502.1
(22) Anmeldetag: 05.08.2009
(51) Int. Cl.: F16D 65/12

(54) **BREMSSCHEIBE**
BRAKE DISK
DISQUE DE FREIN

(30) Priorität: 17.09.2008 DE 102008042165
(43) Veröffentlichungstag der Anmeldung: 29.06.2011
(73) Patentinhaber: Robert Bosch GmbH, 70442 Stuttgart (DE)
(72) Erfinder: MUELLER, Hans-Walter, 80939 München (DE)
(86) Internationale Anmeldenummer: PCT/EP2009/060133
(87) Internationale Veröffentlichungsnummer: WO 2010/031635

(56) Entgegenhaltungen:
- EP-A- 1 128 083
- CH-A- 309 388
- DE-A1- 19 918 667

## Beschreibung

### Stand der Technik

Die Erfindung betrifft eine Bremsscheibe, insbesondere belüftete Bremsscheibe, mit einem Reibring und einem über Verbindungsglieder mit dem Reibring verbundenen Tragteil, insbesondere Scheibentopf. Aus der DE 43 32 951 A1 ist eine belüftete Bremsscheibe bekannt, die einen Reibring und einen mit Verbindungsgliedern mit dem Reibring verbundenen Tragteil aufweist. Die Verbindungsglieder sind insbesondere als Stifte, Bolzen oder dergleichen ausgebildet und über den Umfang des Tragteils verteilt angeordnet. Die Verbindungsglieder ragen in Aussparungen in die Umfangswand des Reibrings. Bei größeren Bremsmomenten besteht die Gefahr, dass aufgrund der freien Länge der Verbindungsglieder, d. h. aufgrund des Abstandes zwischen Tragteil und Reibring, sich die Verbindungsglieder verbiegen können und sich im Extremfall aus ihrem Sitz lösen können.

Ferner ist aus der nachveröffentlichten DE 10 2007 05 43 93 A1 eine Bremsscheibe bekannt, bei der ebenfalls der Reibring und der Scheibentopf aus verschiedenen Materialien hergestellt sind und mit Verbindungsgliedern, insbesondere Stiften, verbunden sind. Diese bekannten Bremsscheiben sind durch die Anzahl der Einzelteile und der damit verbundenen Bearbeitungsschritte und durch damit verbundenen hohen technischen Aufwand charakterisiert. Somit sind diese Bremsscheiben in der Herstellung relativ teuer. Ferner bedeuten die Verbindungsstellen der verschiedenen Bauteile jeweils Angriffsstellen für Korrosion und sonstige Beschädigungen.

### Vorteile der Erfindung

Die erfindungsgemäße Bremsscheibe mit den kennzeichnenden Merkmalen des Anspruchs 1 hat demgegenüber den Vorteil, dass die Anzahl der Bauteile der Bremsscheibe verringert wird. Damit verbunden werden auch die verschiedenen Arbeitsgänge verringert. Tragring, Verbindungsglieder und Reibring können in einem Arbeitsgang hergestellt werden. Während des Gießvorgangs des aus Aluminium bestehenden Scheibentopfs kann der Reibring mit angegossen werden. Dadurch werden die Kosten für die verschiedenen Arbeitsgänge reduziert, und es besteht die Möglichkeit, eine sogenannte "Low-cost-Bremsscheibe" herzustellen. Durch die besondere Anordnung der Schrägen der Noppen des Tragringes entsteht beim Schrumpfen des aus Aluminium bestehenden und angegossenen Scheibentopfs eine feste Verbindung, so dass eine spielfreie Übertragung des Drehmoments ermöglicht wird. Ferner wird auch eine Dichtigkeit der Kontaktstellen gewährleistet, da aufgrund der Schrägen der Noppen während des Erstarrungsprozesses kein Spalt entsteht, in den korrosionsfördernde Medien wie z. B. Salzwasser eindringen könnten. In einfacher Weise können in einem weiteren Arbeitsgang Ausnehmungen im Übergangsbereich zwischen dem Tragring und dem Scheibentopf angebracht werden, sodass aufgrund der beim Bremsen entstehenden Temperaturerhöhung keine Spannungsrisse oder Spannungsbrüche auftreten können. In einfacher Weise können die in der Bremsscheibe bzw. im Tragring entstehenden Temperaturdehnungen über die Ausnehmungen ausgeglichen werden.

### Zeichnung

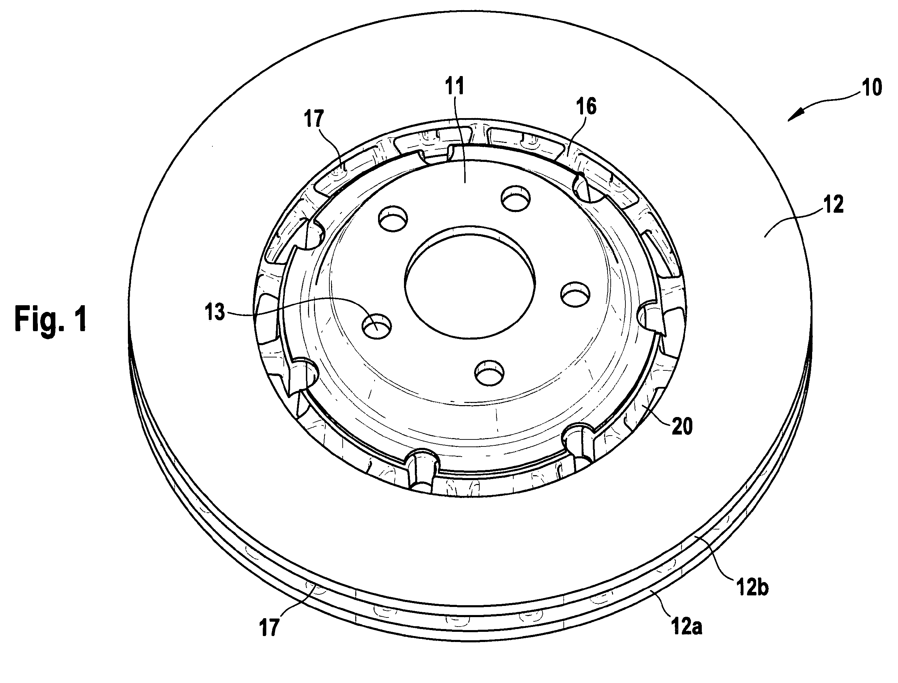

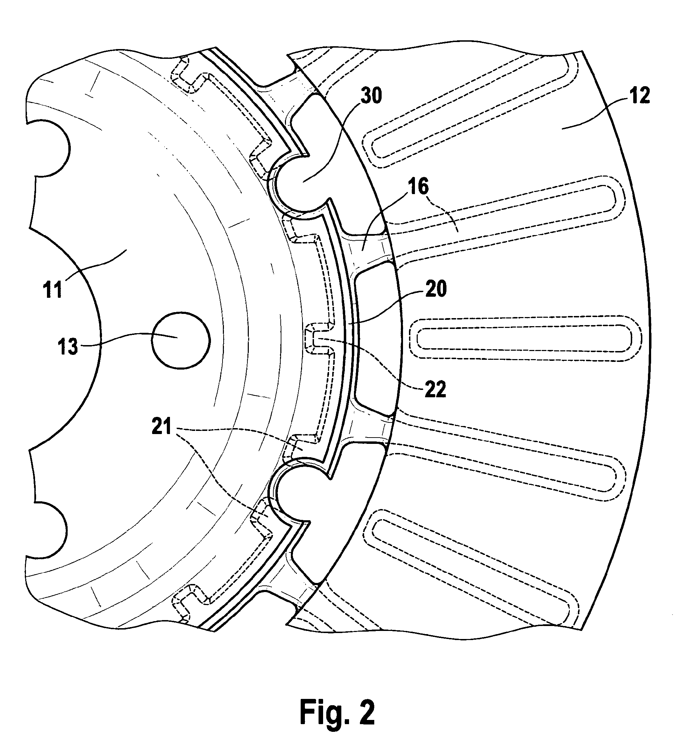

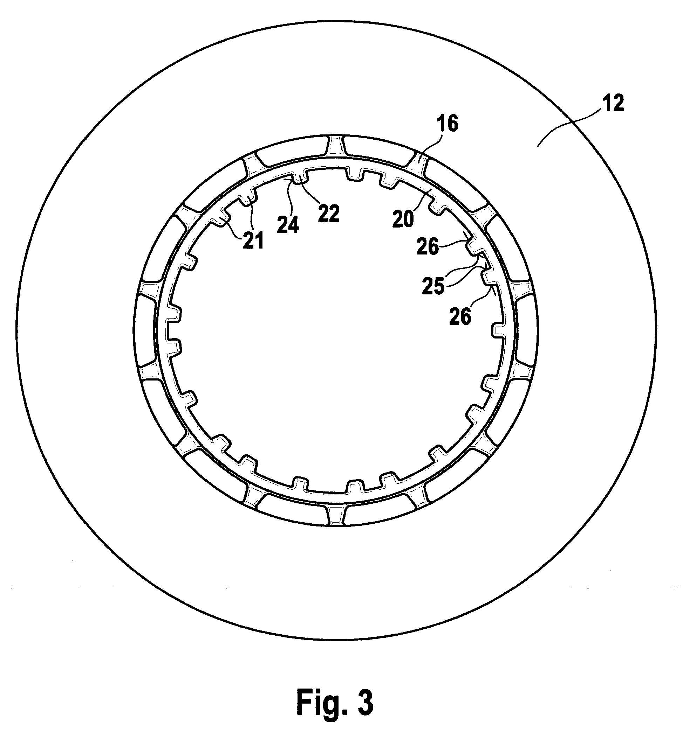

In der Figur 1 ist eine Bremsscheibe in Draufsicht dargestellt, Figur 2 zeigt eine Detaildarstellung des Übergangsbereichs zwischen Scheibentopf und Reibring und Figur 3 den Reibring mit Tragring als einteiliges Bauteil.

### Beschreibung des Ausführungsbeispiels

In der Figur 1 ist mit 10 eine Bremsscheibe bezeichnet, die aus einem Scheibentopf 11 und einem Reibring 12 besteht. In bekannter Weise ist der Scheibentopf 11 in hier nicht dargestellter Weise auf einer Nabe eines Fahrzeugs befestigt, wobei die Schrauben zur Befestigung durch die Bohrungen 13 des Scheibentopfs 11 ragen. Der Reibring 12 besteht aus zwei Reibringhälften 12a und 12b, welche durch eine Vielzahl von über den Umfang verteilten und insbesondere in radialer Richtung verlaufenden Stegen, Noppen oder ähnlichen Verbindungselementen 17 miteinander verbunden sind, sodass eine belüftete Bremsscheibe entsteht. Mit Hilfe von Verbindungsgliedern 16 eines Tragrings 20 und mit Fortsätzen 21, 22 ist der Reibring 12 am Scheibentopf 11 angeordnet. Die Verbindungsglieder 16, der Tragring 20, die Fortsätze 21, 22 und der Reibring 12 stellen ein einteiliges Bauteil dar. Dieses Bauteil kann in einem Arbeitsgang hergestellt werden. Es ist möglich, die beiden Reibringhälften 12a und 12b mit den Stegen 17 in einem Arbeitsgang herzustellen. In einem anderen Arbeitsgang wird der Tragring 20 mit den Verbindungsgliedern 16 und den Fortsätzen 21, 22 hergestellt, wobei in diesem Arbeitsgang auch der Reibring 12 mit an die Verbindungsglieder 16 angegossen wird. Das so hergestellte Bauteil ist in Figur 3 dargestellt. Der Tragring 20, die Verbindungsglieder 16 und die Fortsätze 21, 22 bestehen ebenso wie der Reibring 12 aus Gusseisen. Der Scheibentopf 11 hingegen besteht aus Aluminium. Beim Gießen des Scheibentopfs 11 wird der Reibring 12 mit seinem Tragring 20, d. h. das Bauteil wie in Figur 3 gezeigt, mit an den Scheibentopf 11 angegossen. Um bei diesem Gießvorgang eine Abdichtung der Kokille für den Scheibentopf 11 zu gewährleisten, sind die axialen Flächen des Tragrings 20, d. h. seine Stirnseiten, bearbeitet. Um ein Angießen des Tragrings 20 bzw. des Reibrings 12 an den Scheibentopf 11 zu gewährleisten, sind die Fortsätze 21, 22 am Tragring 20 ausgebildet. Die Fortsätze 21, 22 sind am inneren Umfang des Tragrings 20 in regelmäßigen Abständen ausgebildet. Es sind jeweils zwei Fortsätze 21 hintereinander und dann ein Fortsatz 22 vorhanden. Der Fortsatz 22 ist etwa mittig zwischen zwei aufeinanderfolgenden Fortsätzen 21 ausgebildet. Der Fortsatz 22 hat in etwa senkrecht verlaufende Wandungen 24 . Die Fortsätze 21 haben auf den sich zugewandten Seiten eine schräge Wandung 25. Diese Wandungen 25 können z. B. einen Hinterschnitt darstellen. Die den Fortsätzen 22 zugewandten Wandungen 26 der Fortsätze 21 sind senkrecht ausgebildet. Sie weisen in etwa die Form der Wandungen 24 der Fortsätze 22 auf. Ferner sind die Fortsätze 22 etwa mittig zwischen zwei Verbindungsgliedern 16 angeordnet. Die beiden Fortsätze 21 befinden sich ebenfalls zwischen zwei Verbindungsgliedern 16, wobei die Fortsätze 21 möglichst nahe im Bereich des Ansatzes der Verbindungsglieder 16 sich befinden. Die Fortsätze 22 dienen dazu, das Bremsmoment vom Tragring 20 bzw. vom Reibring 12 auf den Scheibentopf 11 zu übertragen. Es sei angemerkt, dass das Bremsmoment vom Reibring 12 mit Hilfe der Verbindungsglieder 16 auf den Tragring 20 übertragen wird. Die Fortsätze 21 ermöglichen aufgrund ihrer schrägen Wandungen 25, dass nach dem Angießen des Scheibentopfs 11 an den Tragring 20 beim Abkühlen des Materials, d. h. des Aluminiums, ein Schrumpfen des Aluminiums des Scheibentopfs 11 an das Gusseisen des Tragrings 20 erfolgt. Dadurch wird eine radiale relative Bewegung des Scheibentopfs 11 und des Tragrings 20 zueinander verhindert. Es wird somit eine spielfreie Übertragung des Drehmoments von dem Tragring 20 auf den Scheibentopf 11 gewährleistet. Die schrägen Wandungen 25 der Fortsätze 21 sind dabei so ausgebildet und auf den Schrumpfvorgang ausgerichtet, dass beim Schwinden des Aluminiums beim Erstarren keine Spalte entstehen können, in die korrosionsfördernde bzw. korrosionserzeugende Medien wie z. B. Salzwasser bei Betrieb der Bremse eindringen können. Ferner sind, wie aus der Figur 2 ersichtlich, zwischen den Fortsätzen 21 Ausnehmungen 30 ausgebildet. Diese Ausnehmungen 30 werden nach dem Angießen des Scheibentopfs 11 auf dem Tragring 20 und nach dem vollständigen Abkühlen des Aluminiums in einem weiteren Arbeitsgang ausgebildet. Diese Ausnehmungen 30 können z. B. als Bohrungen beigebracht werden. Diese Ausnehmungen 30 haben die Aufgabe, eine thermisch bedingte unterschiedliche Dehnung zwischen dem Material des Scheibentopfs 11 und dem Material des Tragrings 20 auszugleichen. Beim Bremsen entsteht im Reibring 12 Wärme, die auch über die Verbindungsstege 16 auf den Tragring 20 übertragen wird. Der Reibring 12 dehnt sich dabei etwas aus. Würde sich der Tragring 20 nicht aufgrund der Ausnehmungen 30 ausdehnen können, so würden Zugspannungen auftreten, die zu einem Reißen des Tragrings 20 führen könnten.

## Patentansprüche

1. Bremsscheibe (10), insbesondere belüftete Bremsscheibe, mit einem Reibring (12) und mit einem am Reibring (12) angeordneten Tragteil (11), wobei am Reibring (12) Verbindungsteile (16) vorhanden sind, mit deren 1 lilfe der Reibring (12) am Tragteil (11) angeordnet ist, **dadurch gekennzeichnet, dass** der Reibring (12) mit den Verbindungsteilen (16) und mit einem Tragring (20) ein einteiliges Bauteil (12, 16, 20) aus Gusseisen darstellt und dass das Tragteil (11) der Bremsscheibe (10) aus Leichtmetall besteht und an den Tragring (20) angegossen ist.

2. Bremsscheibe nach Anspruch 1, **dadurch gekennzeichnet, dass** der Tragring (20) erste (21) und zweite Fortsätze (22) an seinem Innenumfang aufweist.

3. Bremsscheibe nach Anspruch 2, **dadurch gekennzeichnet, dass** die ersten Fortsätze (21) mindestens eine schräge Wandung (25) aufweisen.

4. Bremsscheibe nach einem der Ansprüche 2 oder 3, **dadurch gekennzeichnet, dass** die zweiten Fortsätze (22) senkrechte Wandungen (24) aufweisen.

5. Bremsscheibe nach einem der Ansprüche 2 bis 4, **dadurch gekennzeichnet, dass** die ersten (21) und zweiten Fortsätze (22) in regelmäßigen Abständen am Innenumfang des Tragrings (20) angeordnet sind.

6. Bremsscheibe nach einem der Ansprüche 2 bis 5, **dadurch gekennzeichnet, dass** zwei erste Fortsätze (21) zwischen zwei Verbindungsteilen (16) angeordnet sind und dass ein zweiter Fortsatz (22) zwischen jeweils zwei Verbindungsteilen (16) angeordnet ist.

7. Bremsscheibe nach einem der Ansprüche 1 bis 6, **dadurch gekennzeichnet, dass** am Übergang zwischen dem Tragring (20) und dem Tragteil (11) mindestens eine Ausnehmung (30) ausgebildet ist.

8. Bremsscheibe nach einem der Ansprüche 1 bis 7, **dadurch gekennzeichnet, dass** das Tragteil (11) aus Aluminium, besteht.

## Claims

1. Brake disc (10), in particular ventilated brake disc, having a friction ring (12) and having a bearing part (11) which is arranged on the friction ring (12), there being connecting parts (16) on the friction ring (12), with the aid of which connecting parts (16) the friction ring (12) is arranged on the bearing part (11), **characterized in that** the friction ring (12) with the connecting parts (16) and with a bearing ring (20) represents a single-piece component (12, 16, 20) made from cast iron, and **in that** the bearing part (11) of the brake disc (10) is composed of lightweight metal and is cast integrally onto the bearing ring (20).

2. Brake disc according to Claim 1, **characterized in that** the bearing ring (20) has first (21) and second projections (22) on its inner circumference.

3. Brake disc according to Claim 2, **characterized in that** the first projections (21) have at least one oblique wall (25).

4. Brake disc according to either of Claims 2 and 3, **characterized in that** the second projections (22) have perpendicular walls (24).

5. Brake disc according to one of Claims 2 to 4, **characterized in that** the first (21) and second projections (22) are arranged at regular spacings on the inner circumference of the bearing ring (20).

6. Brake disc according to one of Claims 2 to 5, **characterized in that** two first projections (21) are arranged between two connecting points (16), and **in that** a second projection (22) is arranged between in each case two connecting points (16).

7. Brake disc according to one of Claims 1 to 6, **characterized in that** at least one recess (30) is formed at the transition between the bearing ring (20) and the bearing part (11).

8. Brake disc according to one of Claims 1 to 7, **characterized in that** the bearing part (11) is composed of aluminium.

## Revendications

1. Disque de frein (10), notamment disque de frein ventilé, comprenant une bague de friction (12) et une partie de support (11) disposée sur la bague de friction (12), des pièces de connexion (16) étant prévues sur la bague de friction (12), à l'aide desquelles la bague de friction (12) est disposée sur la partie de support (11),
**caractérisé en ce que**
la bague de friction (12) avec les parties de connexion (16) et avec une bague de support (20) constitue un composant d'une seule pièce (12, 16, 20) en fonte et **en ce que** la partie de support (11) du disque de frein (10) se compose de métal léger et est moulée sur la bague de support (20).

2. Disque de frein selon la revendication 1, **caractérisé en ce que** la bague de support (20) présente des premières (21) et deuxièmes saillies (22) sur sa périphérie interne.

3. Disque de frein selon la revendication 2, **caractérisé en ce que** les premières saillies (21) présentent au moins une paroi oblique (25).

4. Disque de frein selon l'une quelconque des revendications 2 ou 3, **caractérisé en ce que** les deuxièmes saillies (22) présentent des parois verticales (24).

5. Disque de frein selon l'une quelconque des revendications 2 à 4, **caractérisé en ce que** les premières (21) et les deuxièmes saillies (22) sont disposées à intervalles réguliers sur la périphérie interne de la bague de support (20).

6. Disque de frein selon l'une quelconque des revendications 2 à 5, **caractérisé en ce que** deux premières saillies (21) sont disposées entre deux pièces de connexion (16) et **en ce qu'**une deuxième saillie (22) est disposée entre deux pièces de connexion respectives (16).

7. Disque de frein selon l'une quelconque des revendications 1 à 6, **caractérisé en ce qu'**au moins un évidement (30) est réalisé au niveau de la transition entre la bague de support (20) et la partie de support (11).

8. Disque de frein selon l'une quelconque des revendications 1 à 7, **caractérisé en ce que** la partie de support (11) se compose d'aluminium.
